Europäisches Patentamt

European Patent Office

Office européen des brevets

(11) Numéro de publication: **0 132 479**

**A1**

(12) # DEMANDE DE BREVET EUROPEEN

(21) Numéro de dépôt: **83420129.5**

(22) Date de dépôt: **20.07.83**

(51) Int. Cl.⁴: **B 23 B 29/034**

(43) Date de publication de la demande:
**13.02.85 Bulletin 85/7**

(84) Etats contractants désignés:
**AT BE CH DE FR GB IT LI NL**

(71) Demandeur: **CAROLE, Société dite:**
**Chemin de la Croix du Meunier**
**F-69390 Vernaison(FR)**

(71) Demandeur: **OUTILLAGE R.C., Société dite:**
**11 Rue Denis Papin**
**F-77680 Roissy en Brie(FR)**

(72) Inventeur: **Carmona, Jean**
**6 Rue Omer-Louis**
**F-69003 Lyon(FR)**

(74) Mandataire: **Maisonnier, Jean**
**28 rue Servient**
**F-69003 Lyon(FR)**

(54) **Porte-outil d'alésage pour usiner des pièces mécaniques.**

(57) L'invention concerne le réglage de la position transversale d'un outil coupant d'alésage (6) par rapport à la broche porte-outil (1).

le support (8) est surmonté par une âme (9) à coulissement transversal. Ce coulissement est commandé par une vis (15), dont la tête (17) forme vernier, tandis que sa couronne dentée (16) est attaquée tangentiellement par une vis sans fin (22). La bride (27) retient transversalement l'ensemble (15), (16), (19). La vis (12) bloque le support (8) après réglage.

Application : réduction de l'encombrement diamétral de l'outil; augmentation de la précision par suppression des réactions parasites qui tendent à modifier le réglage au moment du verrouillage final.

FIG7

EP 0 132 479 A1

La présente invention est relative à un porte-outil d'alésage , destiné à être utilisé sur une aléseuse , pour usiner des pièces mécaniques.

On sait que l'aléseuse est une machine-outil permettant d'usiner le diamètre intérieur d'un cylindre à une cote très précise , et suivant des tolérances serrées . L' outil est porté par une broche qui tourne à l'intérieur du cylindre à usiner . La cote d'usinage dépend donc de la position de l'outil par rapport à la broche .

On rencontre fréquemment une difficulté pour régler la position de l'outil sur son support . En effet , avec le dispositif connu , il arrive qu'une fois réglée avec précision la position de l'arête coupante de l'outil , l'opérateur dérègle involontairement cette position lorsqu' il effectue le serrage et le blocage de l'outil dans son support.

L'invention a pour but de réaliser un porte-outil d'aléseuse qui permette un réglage très précis de la position de l'outil , sans qu'il soit par ailleurs nécessaire de sortir l'outil de son support pour procéder à ce réglage.

Un porte-outil d'alésage selon l'invention comporte un outil coupant fixé de façon amovible sur son support , et une broche sur laquelle est fixé le support , et il est caractérisé en ce que le support est monté à coulissement transversal sur la broche , son coulissement transversal étant commandé par un mécanisme à vis et écrou , muni de moyens de repérage angulaire et de moyens permettant de bloquer ou de libérer simultanément et en une seule opération , à la fois le support , les moyens de commande et les moyens de repérage .

Suivant une autre caractéristique de l'invention , le support possède une âme plate , logée à coulisse - ment transversal dans une fente diamétrale prévue à l'extrémité de la broche , les moyens de blocage étant constitués par une vis dont la tête et l'extrémité filetée prennent appui respectivement sur les deux pans de la broche situés de part et d'autre de la fente diamétrale , tandis que par ailleurs , la tige de la vis traverse une lumière de plus grande dimension ,découpée dans l'âme plate du support , laquelle

0132479

est logée dans la fente 2, entre les deux pans de la broche.

Suivant une autre caractéristique de l'invention, la vis de réglage actionnant l'âme du support possède une tête graduée visible depuis l'extérieur, et susceptible de tourner face à un repère extérieur fixe, de façon à constituer le cadran rotatif d'un vernier de repérage.

Suivant une autre caractéristique de l'invention, la vis agissant sur l'âme plate du support est solidaire d'une couronne dentée qu'actionne une vis sans fin tangente, dont la tête est commandée depuis l'extérieur à l'aide d'un outil connu, clé ou tournevis.

Suivant une autre caractéristique de l'invention, la vis-vernier attaquant l'âme du support et la vis tangente de déclenchement ont des axes géométriques orthogonaux entre eux, et eux-mêmes orthogonaux à la direction de l'axe longitudinal de la broche.

Suivant une autre caractéristique de l'invention, la vis tangente de déclenchement est orientée parallèlement derrière une bride fixe encastrée longitudinalement dans le corps de la broche, cette bride fixe ayant à sa partie inférieure, une fourche qui s'engage autour de la vis de déclenchement du support, entre sa tête et sa couronne dentée, pour immobiliser dans leur sens axial cette vis et sa couronne tangente, à l'intérieur de la broche, tout en les laissant tourner librement.

Suivant une autre caractéristique de l'invention, la tête tournante de la vis-vernier possède un diamètre extérieur sensiblement égal à la largeur de la bride fixe rapportée dans la broche. Grâce à cette disposition, on verra que le fait de bloquer le support en rapprochant l'un de l'autre les deux pans de l'extrémité de la broche assure simultanément le blocage des moyens de commande, c'est-à-dire de la vis-vernier, et ceci sans la soumettre à la moindre réaction tendant à modifier son réglage.

Suivant une autre caractéristique de l'invention, l'extrémité de la broche comporte une fente diamétrale située entre deux pans, réunis par une vis transversale de blocage qui traverse également une ouverture allongée découpée dans l'âme plate du support d'outil , cette
âme plate étant logée dans la fente où elle peut coulisser
transversalement , tandis que des cannelures orientées
elles aussi transversalement , assurent son guidage .

Le dessin annexé , donné à titre d'exemple
non limitatif , permettra de mieux comprendre les caractéristiques de l'invention.

Figure 1 est une vue de face , montrant l'
ensemble d'une broche d'alésage , et de son outil , montés
selon l'invention.

Figure 2 est une vuel latérale suivant II
(figure 1 ).

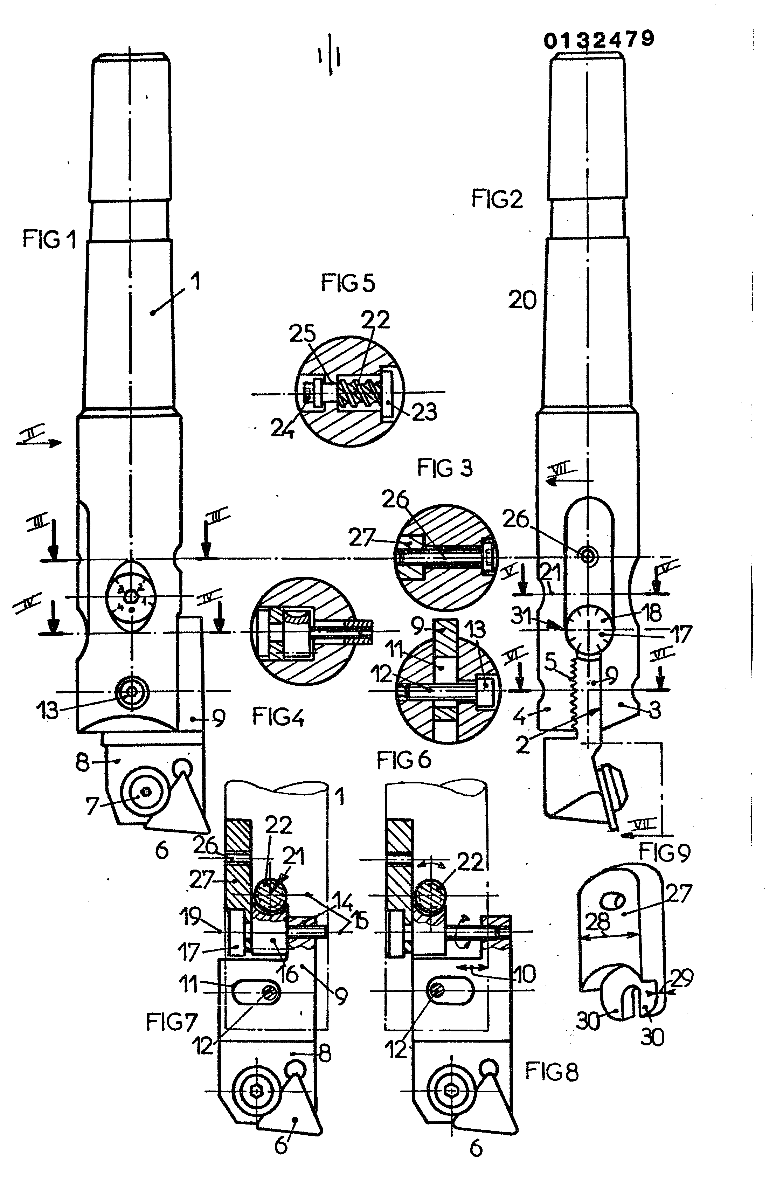

Figures 3 ety 4 sont des coupes respectivement suivant III – III et IV – IV ( figure 1).

Figures 5 et 6 sont des coupes respectivement suivant V – V et VI – VI ( figure 2).

Figures 7 et 8 sont des coupes suivant VII –
VII ( figure 2) , correspondant à deux positions différentes pour le réglage de l'outil de coupe.

Figure 9 est une vue en perspective montrant
isolément , la bride fixe .

On a représenté sur les dessins , une broche
1 d'un type connu , dont l'extrémité conique est destinée
à s'adapter à la manière habituelle sur une machine-outil
du type des aléseuses . A l'avant , la broche 1 est munie
d'une fente diamétrale 2 , de part et d'(autre de laquelle
elle d. finit deux pans 3 et 4 . La face interne du pan 3
est munie de cannelures 5 , orientées transversalement .

L'outil d'alésage est un outil coupant 6
de type connu , qu'une vis 7 permet de bloquer sur son support 8 . Selon l'invention , le support 8 est surmonté par
une âme plate 9 , dont il est solidaire . Cette dernière
vient s'adapter dans la fente 2 , entre les deux pans 3 et
4 , où elle peut coulisser transversalement ( figure 8 ,
flèche double 10) . Ce mouvement transversal est guidé par
encastrement des cannelures 5 du pan 4 , sur des cannelures
analogues prévues sur la face en regard de l'âme plate 9.

Cette dernière est découpée suivant une ou-

4

verture allongée transversale 11 , que traverse une vis de blocage 12 . La tête 13 de cette dernière prend appui dans le pan 3 où elle est encastrée , tandis que son extrémité filetée se visse dans un trou taraudé du pan 4 .

A sa partie supérieure , l'âme 9 possède un prolongement 14 , muni d'un trou taraudé transversal dans lequel se visse la tige filetée 15 d'une vis d'avance . Cette vis 15 est solidaire d'une couronne dentée 16 , au-delà de laquelle elle se termine par une tête circulaire 17 , dont la face extérieure à l'outil porte des graduations radiales 18 . L'axe géométrique 19 de la vis de réglage 15 , 16 , 17 est orienté perpendiculairement à l'axe longitudinal 20 de la broche 1 .

Ces deux axes 19 et 20 sont eux-mêmes orthogonaux à un troisième axe 21 , qui est celui d'une vis de commande 22 , (figure 5) . Cette vis de commande 22 est une vis sans fin qui engrène tengentiellement dans la couronne 36 . La tête 23 de la vis 22 est accessible depuis l'extérieur , par exemple par un tournevis ou une clé hexagonale , afin de commander sa rotation .

L'extrémité libre 24 de la vis sans fin 22 est immobilisée dans le sens axial , par rapport à une cloison fixe 25 définie dans la broche 1 , par exemple à l'aide d'un circlip.

Enfin , on encastre latéralement dans un logement de la broche 1 , où elle est immobilisée par une vis 26 , une bride fixe 27 ayant la forme illustrée sur la figure 29 . Cette bride 27 possède un corps à deux bords parallèles , dont la largeur 28 est sensiblement égale au diamètre extérieur de la tête-vernier 17 de la vis de réglage 15, 16 , 17 . A sa partie inférieure , dont l'épaisseur 29 est réduite , la bride 27 définit une fourche dont les deux bras 30 viennent s'engager entre la tête-vernier 17 et la couronne 16 , de part et d'autre de la tige de la vis-vernier , de façon à l'immobiliser dans le sens axial, tout en la laissant librement tourner .

le fonctionnement est le suivant :

Lorsque la vis 12 , 13 , est bloquée ,l'âme plate 9 du support 8 se trouve serrée entre les deux pans 3

5

et 4 , et l'outil 6 est prêt pour l'usinage . Simultanément, la tête ronde 17 de la vis-vernier 15 , 16 , 17 , se trouve immobilisée , du fait de ce serrage.

Pour changer le réglage , c'est-à-dire pour déplacer transversalement l'arête coupante de l'outil 6 par rapport à l'axe géométrique de la broche 20 , il suffit à l'opérateur de desserrer la vis 12 , 13 , puis d'agir sur la tête 23 de la vis sans fin 22 . En faisant tourner cette dernière , il agit avec démultiplication sur la vis de réglage 15 , 16 , 17 , dont la rotation angulaire est mesurée avec précision , grâce au vernier que constituent les graduations 18  se déplaçant devant un repère fixe tel que 31 (figure 2) . Une fois réglée avec précision la position de l'outil 6 , il suffit d'une seule opération , constituée par le blocage de la vis 12 , 13 , pour immobiliser tous les organes du porte-outil , à la fois l'âme 9 et la tête 17 de la vis-vernier 15 , 16 , 17 , sans qu'aucune réaction parasite n'apparaisse , visant à dérégler l'ensemble.

On comprend qu'outre cet avantage , le dispositif selon l'invention présente  plusieurs  autres particularités . En particulier :

- l'ensemble du dispositif est constitué par peu de pièces , ce qui réduit les jeux de fonctionnement ;

- il est possible de donner à l'ensemble un diamètre extérieur hors tout extrêmement réduit , ce qui convient bien notamment pour de petits alésages ;

- la bride fixe 27 rend prisonnier  dans le sens transversal , l'axe de la vis de réglage 15 , 16 , 17 , qui peut cependant tourner à frottemet doux : les jeux s'en trouvent d'autant limités ;

- l'ensemble présente une grande commodité d'emploi , car il suffit par exemple de savoir que vingt tours de la clé ou de la vis sans fin 22 correspondent à  un  tour  du vernier 17  : ainsi , on ne risque pas de se tromper en comptant un nombre important de tours , par exemple quarante pour la tête 23 de la vis de commande.

6

REVENDICATIONS

1 - Porte-outil d'alésage comportant un outil coupant (6) fixé de façon amovible sur son support (8) ,et une broche (1) sur laquelle est fixé le support (8) , caractérisé en ce que le support (8) est monté à coulissement transversal sur la broche (1) , son coulissement transversal (10) étant commandé par un mécanisme à vis (15) et écrou (14) , munis de moyens de rep"rage angulaire et de moyens permettant de bloquer ou de libérer simultanément , et en une seule opération , à la fois le support , les moyens de commande , et les moyens de repérage.

2 - Porte-outil suivant la revendication 1 , caractérisé en ce que le support (8) possède une âme plate (9) , logée à coulissement transversal dans une fente diamétrale (2) prévue à l'extrémité de la broche (1) , les moyens de blocage étant constitués par une vis dont la tête (13) et l'extrémité filetée (12) prennent appui respectivement sur les deux pans (3) et (4) de la broche (1) situés de part et d'autre de la fente diamétrale (2) , tandis que par ailleurs , la tige (12) de la vis traverse une lumière de plus grande dimension (11) , découpée dans l'âme plate (9) du support (8) , laquelle est logée dans la fente (2) , entre les deux pans (3) et (4) de la broche (1).

3 - Porte-outil suivant l'une quelconque des revendications 1 ou 2 , caractérisé en ce que la vis de réglage (15) actionnant l'âme (9) du support (8) possède une tête graduée (17) visible depuis l'extérieur , et susceptible de tourner face à un repère extérieur fixe (31) , de façon à constituer le cadran rotatif d'un vernier de repérage.

4 - Porte-outil suivant l'une quelconque des revendications précédentes , caractérisé en ce que la vis (15) (15) agissant sur l'âme plate (9) du support (8) est solidaire d'une couronne dentée (16) qu'actionne une vis sans fin tangente (22) dont la tête (23) est commandée depuis l' extérieur à l'aide d'un outil connu , clé ou tournevis.

5 - Porte-outil suivant l'une quelconque des revendications précédentes , caractérisé en ce que la vis-vernier (15) , (16) , (17) , attaquant l'âme (9) du support (8) et la vis tangente de déclenchement (22) ont des axes géométriques (19) et (21) orthogonaux entre eux , et eux-mêmes orthogonaux à la direction de l'axe longitudinal (20) de la broche (1).

6 - Porte-outil suivant l'une quelconque des revendications précédentes , caractérisé en ce que la vis tangente de déclenchement (22) est orientée parallèlement derrière une bride fixe (27) encastrée longitudinalement dans le corps de la broche (1) , cette bride fixe (27) ayant , à sa partie inférieure , une fourche dont les bras (30) s'engagent autour de la vis de déclenchement (15) , (16) , (17) du support (8) , entre sa tête (17) et sa couronne dentée (16) pour immobiliser dans leur sens axial cette vis et sa couronne tangente , à l'intérieur de la broche (1) , tout en les laissant tourner librement.

7 - Porte-outil suivant l'une quelconque des revendications précédentes , caractérisé en ce que la tête tournante (17) de la vis-vernier possède un diamètre extérieur sensiblement égal à la largeur (28) de la bride fixe (27) rapportée dans la broche (1) , si bien que le fait de bloquer le support (8) en rapprochant l'un de l'autre les deux pans (3) et (4) de l'extrémité de la broche (1) , assure simultanément le blocage des moyens de commande ,c'est-à-dire de la vis-vernier (15) , (16) , (17) , et ceci sans la soumettre à la moindre réaction tendant à modifier son réglage.

8 -Porte-outil suivant l'une quelconque des revendications précédentes , caractérisé en ce que l'âme plate (9) logée dans la fente (2) où elle peut coulisser transversalement , possède des cannelures (5) orientéés elles aussi transversalement , et assurant son guidage sur les cannelures analogues du pan (4).

Office européen
des brevets

**RAPPORT DE RECHERCHE EUROPEENNE**

EP 83 42 0129

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 617 144 (KOPPELMAN) <br> * En entier * | 1-3,8 | B 23 B 29/034 |
| | --- | | |
| A | US-A-2 484 480 (ANDERSON) <br> * En entier * | 1,4,5 | |
| | --- | | |
| A | FR-A-1 556 424 (MAPAL) <br> * Page 2, colonne de droite, lignes 3-8; figure 2 * | 1,6 | |
| | --- | | |
| A | DE-A-1 801 558 (VALERON) | | |
| | --- | | |
| A | GB-A-2 016 317 (GILDEMEISTER-DEVLIEG) | 8 | |
| | --- | | **DOMAINES TECHNIQUES RECHERCHES (Int. Cl. ³)** |
| A | GB-A-1 199 718 (BOKUM) | | B 23 B 29/00 |
| | --- | | |
| A | US-A-3 801 213 (EVERSOLE) | | |
| | ----- | | |

Le présent rapport de recherche a été établi pour toutes les revendications

| Lieu de la recherche | Date d'achèvement de la recherche | Examinateur |
|---|---|---|
| LA HAYE | 07-03-1984 | BOGAERT F.L. |